# EUROPEAN PATENT SPECIFICATION

(11) **EP 3 964 723 B1**
(45) Date of publication and mention of the grant of the patent: **07.06.2023**
(21) Application number: 20906777.6
(22) Date of filing: 11.12.2020
(51) Int. Cl.: F16C 32/04, F16C 32/06, F16C 19/00, F16C 19/54, F16C 27/04

(54) **PARALLEL BEARING AND ROTOR SYSTEM**
PARALLELLAGER UND ROTORSYSTEM
PALIER PARALLÈLE ET SYSTÈME DE ROTOR

(30) Priority: 23.12.2019 CN 201911340107
(43) Date of publication of application: 09.03.2022
(73) Proprietor: Technologies'xanadu Of Resonatory-solar-systemed Co., Ltd., Xicheng District Beijing 100029 (CN)
(72) Inventor: JIN, Pu, Beijing 100176 (CN); LIU, Muhua, Beijing 100176 (CN)
(74) Representative: Petculescu, Ana-Maria
(86) International application number: PCT/CN2020/135893
(87) International publication number: WO 2021/129426

(56) References cited:
- WO-A1-2018/091200
- CN-A- 104 203 721
- CN-A- 105 431 638
- CN-A- 108 930 715
- CN-A- 109 963 769
- CN-A- 110 905 919
- CN-U- 211 343 730
- DE-A1-102010 054 996
- US-A1- 2015 053 034

## Description

### TECHNICAL FIELD

The present disclosure relates to the technical field of bearings, and in particular, to a parallel bearing and a rotor system.

### BACKGROUND

DN factors are used as a reference for selecting lubricating oils of rolling bearings, wherein D denotes a diameter of a bearing and N denotes a relative rotational speed between inner and outer rings of the bearing. A bearing with a high DN factor imposes high requirements on the adhesiveness, the service life and the working temperature of lubricating greases or lubricating oils, but these lubricating greases or lubricating oils are usually expensive.

Theoretically, rotary shafts with greater diameters can withstand heavier loads and higher critical rotational speeds. However, such a rotary shaft needs to fit with the bearings with greater DN factors and requires high-performance lubricating oils, thereby preventing the bearings from being worn, and preventing the shafts from being blocked.

In order to deal with the wear of the bearings, the Chinese patent application No. 201480053353.6, entitled "Bearing Device for Turbocharger and Manufacturing Method Thereof", provides a bearing device. In the device, the barrel equivalent to the fluid bearing is sleeved on the ball bearing. However, since the inner wall is fixed to the outer ring of the ball bearing and the outer wall rotates relative to the stator, the barrel is equivalent to a protective sleeve outside the ball bearing. In this way, the relative rotational speed of the bearing is not changed and the high-performance lubricating greases or lubricating oils are still essential.

For non-contact bearings such as radial air bearings, the support function depends on pressurized air between the shaft and the inner ring of the bearing. Generally, a rubber ring is provided between the outer ring of the bearing and the bearing holder, and the bearing is fixed through a frictional force between the rubber ring and the outer ring of the bearing, which prevents the bearing from circumferentially rotating. However, in actual applications of the air bearings, when the rotary shaft has a rotational speed of about 100,000 revolutions per hour or above, there is air friction between the pressurized air film and the rotary shaft. The friction increases while the rotational speed of the rotary shaft increases, and the torque resulting from the frictional force allows the air bearing to rotate more obviously and frequently with the rotary shaft. Moreover, when the rotational speed of the rotary shaft continues to increase or the diameter of the rotary shaft increases, the frictional force between the air film and the inner ring of the radial air bearing is further increased. In this case, the radial air bearing has a greater rotational speed relative to the bearing holder, such that the rubber ring is worn and damaged easily. WO 2018/091200 A1 mentions a steering system for a motor vehicle, comprising the following: - a steering gear which comprises - a housing, - a gear, - a screw pinion which meshes with the gear, and - a screw pinion shaft which comprises the screw pinion, wherein - the screw pinion shaft is mounted in a fixed bearing on one side of the screw pinion, said fixed bearing comprising a rotational bearing in which the screw pinion shaft is received and which is received in a bearing sleeve; the fixed bearing additionally comprises a pivot ring which has an outer ring and an inner ring that are pivotally connected via one or more torsion webs; the inner ring is connected to the bearing sleeve or is integrated into same; and the outer ring is fixed in the housing, and - the screw pinion shaft is mounted in a floating bearing on the other side of the screw pinion, said floating bearing comprising a rotational bearing in which the screw pinion shaft is received and which is received in a bearing bushing mounted in the housing, said bearing bushing ensuring a radial mobility of the rotational bearing within the housing. The steering system also comprises a steering motor which is drivingly connected to the screw pinion shaft of the steering gear solely via a coupling element. The outer ring of the pivot ring of the fixed bearing and/or the bearing bushing of the floating bearing is fixed in the housing solely with the interposition of a vibration-damping decoupling element and/or - the pivot ring of the fixed bearing, the bearing bushing of the floating bearing, the screw pinion, the gear, and/or the coupling element are at least partly made of a vibration-damping material.

### SUMMARY

An objective of the present disclosure is to provide a parallel bearing and a rotor system having the same, to overcome the above defects of the prior art. The present disclosure can solve the technical problems of the high dependency of existing contact bearings on lubricants and the overlarge frictional force between existing non-contact bearings and rotary shafts rotating at the high speed.

To achieve the above objective, the following technical solutions are employed in the present disclosure.

A parallel bearing includes a rotary shaft bearing and a stator bearing, where the rotary shaft bearing is a contact bearing, and the rotary shaft bearing is sleeved on a rotary shaft; and the stator bearing is a non-contact bearing, the stator bearing is sleeved on the rotary shaft bearing, a clearance is provided between the stator bearing and the rotary shaft bearing, and the stator bearing is fixed on a stator.

The parallel bearing includes at least one intermediate bearing, the intermediate bearing is a contact bearing, the intermediate bearing is sleeved between the rotary shaft bearing and the stator bearing, and a clearance is provided between the stator bearing and the intermediate bearing.

The intermediate bearing is a ball bearing.

The present disclosure further provides a rotor system having a parallel bearing, where the rotor system includes two same parallel bearings, namely a first parallel bearing and a second parallel bearing, and the first parallel bearing and the second parallel bearing are pairwise sleeved on a rotary shaft.

As a further improvement, the rotor system may further include a turbine, a compressor, a motor and a thrust bearing; and the rotary shaft may pass through the thrust bearing, the first parallel bearing, the motor, the second parallel bearing, the compressor and the turbine that are arranged sequentially, the rotary shaft may rotate in a stator of the thrust bearing, the first parallel bearing, a stator of the motor and the second parallel bearing, and the rotary shaft may be fixedly connected to a thrust collar of the thrust bearing, a worm gear of the turbine, and a compression wheel of the compressor.

The present disclosure may be applied to microturbines having the above rotor system.

As emerging small heat engines, the microturbines (micro-turbines) have a stand-alone power of 25-300 kW and take a radial-flow turbomachine (centripetal turbine and centrifugal compressor) and a regenerative cycle as basic technical features.

The advanced microturbines yield a series of state-of-the-art technical features such as multi-set integration and expansion, various fuels, low rate of fuel consumption, low noise, low emission, low vibration, low maintenance rate, and capability of implementing remote control and diagnosis. In addition to distributed generation, they can further be applied to standby power stations, heat and power cogeneration, grid-connected generation, peak load generation and so on, and are the best alternative for providing the clean, reliable, high-quality, multi-purpose and small distributed generation and heat and power cogeneration, no matter in central cities or exurban countryside or even remote areas. Furthermore, thanks to the advantages in civil transportation (hybrid electric vehicles), military vehicles and border defense on land and sea, the microturbines have attracted the attention of such military powers as America and Russia. In this sense, it is also very important to develop the microturbines for the state security.

Compared with central power stations, the microturbines make the power stations closer to users and are more reliable owing to the distributed generation; and for terminal users, the microturbines are more environment-friendly than other small power generation devices, or will work in parallel with central power plants as one basic part in future public utilities.

The present invention has the following beneficial effects: The parallel bearing is cost-effective, reduces the relative rotational speed of each stage of bearing, breaks through the limitation of the theoretical DN factor and has the low dependency on the lubricating oil. In the prior art, the air film is present between the rotary shaft and the air bearing, and with the further increase in the rotational speed of the rotary shaft or the diameter of the rotary shaft, the frictional force is greater. However, after the parallel bearing of the present disclosure is used, the air film is present between the outer ring of the rolling bearing and the air bearing; and as the rotational speed of the outer ring of the rolling bearing is small, the relative rotational speed between the air film and the air bearing, the frictional force, and the rotational speed relative to the bearing holder are all small; and therefore, the rubber ring between the air bearing and the bearing shell is hardly worn to improve the service life. Without artificial setting or control, rotational speeds of multiple parallel bearings on the same rotary shaft can be adaptively adjusted to achieve the synchronous rotation.

### BRIEF DESCRIPTION OF THE DRAWINGS

FIG. 1 is a schematic structural view of a parallel bearing, not part of the present invention, according to Embodiment 1.
FIG. 2 is a structural side view of a parallel bearing according to Embodiment 1
FIG. 3 is a schematic structural view of a parallel bearing according to Embodiment 2 in accordance with the present invention.
FIG. 4 is a schematic structural view of a rotor system having a parallel bearing according to present the invention.
FIG. 5 is a schematic structural view illustrating that a parallel bearing, not part of the present invention, is provided on two ends of a shaft.
FIG. 6 is a schematic view of a positional relationship of a bearing according to the present invention when a rotary shaft is started.
FIG. 7 is a schematic view of a positional relationship of a bearing according to the present invention when a rotary shaft is stable.
FIG. 8 is a schematic structural view illustrating that a rotary shaft bearing, not part of the present invention, uses an angular contact ball bearing according to Embodiment 3.
FIG. 9 is a schematic structural view illustrating that a rotary shaft bearing uses an integral multi-layer bearing according to the present invention.

### DETAILED DESCRIPTION OF THE EMBODIMENTS

The following clearly and completely describes the technical solutions of the present disclosure with reference to accompanying drawings.

The present disclosure provides a parallel bearing, provided on a rotary shaft 100 and configured to radially support the rotary shaft 100.

### Embodiment 1

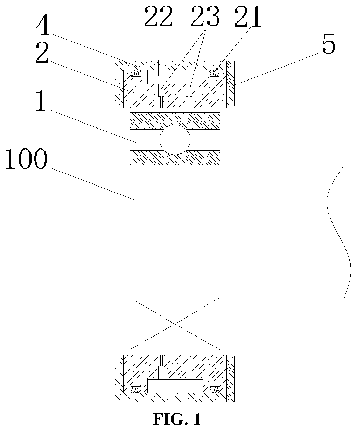

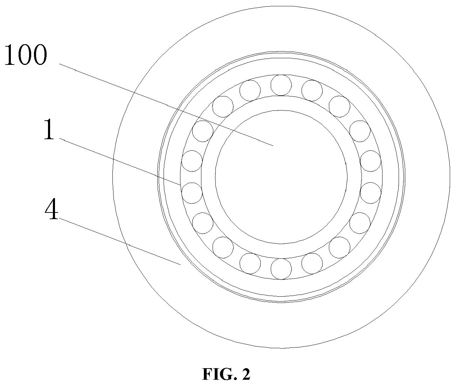

Referring to FIG. 1 and FIG. 2, the parallel bearing in the embodiment includes a rotary shaft bearing 1 and a stator bearing 2. The rotary shaft bearing 1 is sleeved on the rotary shaft 100; and the stator bearing 2 is sleeved on the rotary shaft bearing 1, with a certain clearance from an outer wall of the rotary shaft bearing 1.

A bearing shell 4 covers one end surface and a periphery of the stator bearing 2, a bearing end cover 5 is provided on the other end surface of the stator bearing 2 and abutted against and fixed to the bearing shell 4, the bearing shell 4 and the bearing end cover 5 are fixed on a motor stator, and the stator bearing 2 is peripherally fixed to the bearing shell 4 or the bearing end cover 5.

An air chamber 22 is provided on a peripheral surface of the stator bearing 2, an air hole 23 is formed in a bottom of the air chamber 22, the air hole 23 includes one end communicating with the air chamber 22 and the other end connected to the clearance between the stator bearing 2 and the rotary shaft bearing 1, and a rubber ring 21 is further provided between the stator bearing 2 and the bearing shell 4.

The stator bearing 2 is peripherally fixed to the bearing shell 4 or the bearing end cover 5 through a pin connection, a dowel connection or a key connection.

The pin may be fixed on the end surface of the stator bearing 2, and a corresponding accommodation hole is formed in the bearing shell 4.

The pin may be fixed on an end surface of the bearing shell 4 toward the stator bearing 2, and a corresponding accommodation hole is formed in the stator bearing 2.

The pin or the dowel may be radially provided along the bearing shell 4 from the periphery of the bearing shell 4, the pin includes one end fixed in the bearing shell 4 and the other end inserted into the periphery of the stator bearing 2, and a corresponding accommodation hole is formed in the periphery of the stator bearing 2.

The key may be fixed on the end surface of the stator bearing 2 or integrally formed with one end surface of the stator bearing 2, and a corresponding key slot is formed in the bearing shell 4.

The key may be fixed on the inner radial surface of the bearing shell 4, or integrally formed with the inner radial surface of the bearing shell 4, and a corresponding key slot is formed in the stator bearing 2.

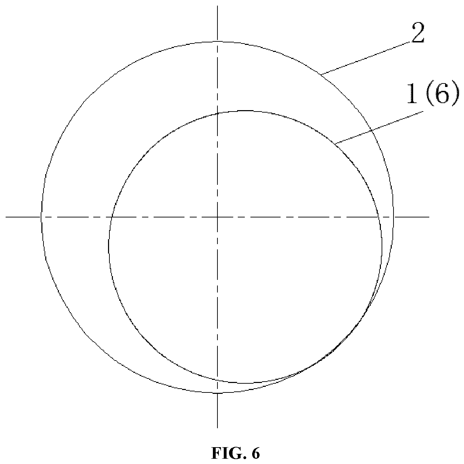

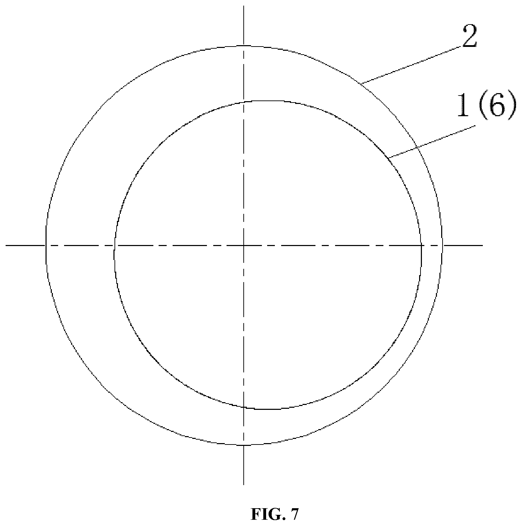

Referring to FIG. 6, when the rotary shaft 100 is started, the rotary shaft bearing 1 sleeved on the rotary shaft 100 contacts the bottom of the stator bearing 2; and along with rotation of the rotary shaft 100, the inner ring of the rotary shaft bearing 1 is driven to rotate. At the same time, the stator bearing 2 is gradually separated from the outer ring of the rotary shaft bearing 1 due to an air film or an oil film, and the rotary shaft bearing 1 rotates eccentrically in the stator bearing 2. When the rotary shaft 100 rotates stably at a high speed, the rotary shaft 100 and the rotary shaft bearing 1 are coaxial, and rotate eccentrically around a circumference in the stator bearing 2, as shown in FIG. 7. Meanwhile, the outer ring of the rotary shaft bearing 1 rotates automatically.

Further, referring to FIG. 1, the present disclosure uses a ball bearing as the rotary shaft bearing 1, and an air bearing as the stator bearing 2.

When the rotary shaft 100 rotates, the inner ring of the ball bearing is driven to rotate, and an air film is formed between the outer ring of the rolling bearing and the air bearing. Fixed on the stator, the air bearing has a relative rotational speed with the outer ring of the rolling bearing.

For the original ball bearing, while the shaft diameter is fixed, the rotary shaft bearing originally provided on the shaft is implemented as follows: Supposing that the ball bearing has a rotational speed of V2 on the inner ring and a rotational speed of V0 on the outer ring during rotation of the rotary shaft, as the outer ring is fixed on the stator, the V0 is approximate to 0, and thus the relative rotational speed of the outer ring of the ball bearing is n=V2-V0.

After the parallel bearing of the present disclosure is used, supposing that the ball bearing has a rotational speed of V2 on the inner ring and a rotational speed of V1 on the outer ring and the air bearing has a rotational speed of V0 during rotation of the rotary shaft 100, as the air bearing is fixed on the stator, the V0 is approximate to 0, and thus the speed difference of the outer ring of the ball bearing relative to the inner ring is a=V2-V1, and the speed difference relative to the air bearing is b=V1-V0, a and b being less than n. Therefore, the relative rotational speed between the inner and outer rings of the rolling bearing is reduced, namely, under the same condition, the actual DN factor is reduced and the common lubricating grease can meet the requirements.

By the same reasoning, no matter how many rolling bearings are sequentially sleeved in parallel on the rotary shaft bearing 1, the actual DN factor is not too large, and thus the shaft diameter D and the rotational speed N of the bearing are decoupled. Therefore, the parallel bearing provided by the present disclosure is applied to working conditions with the large shaft diameter and the high rotational speed. Moreover, the damping and rigidity of the parallel bearing provided by the present disclosure are not lower than those of the single bearing, specifically, the damping of the parallel bearing = the damping of the air bearing + the damping of each rubber ring on the bearing, and the rigidity of the parallel bearing = the rigidity of the air bearing.

### Embodiment 2

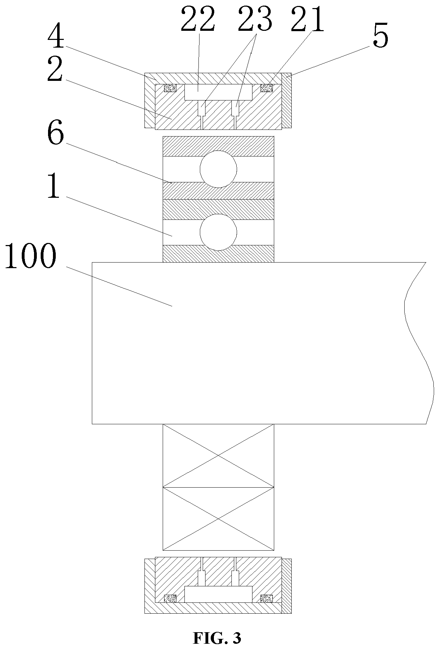

Referring to FIG. 3, the parallel bearing in the embodiment includes a rotary shaft bearing 1, a stator bearing 2 and an intermediate bearing 6.

On the basis of Embodiment 1, the intermediate bearing 6 is sleeved on the rotary shaft bearing 1 (or multiple intermediate bearings 6 are sequentially sleeved and the intermediate bearings 6 are coaxial); and the stator bearing 2 is sleeved on an outermost intermediate bearing 6, with a certain clearance from an outer wall of the outermost intermediate bearing 6.

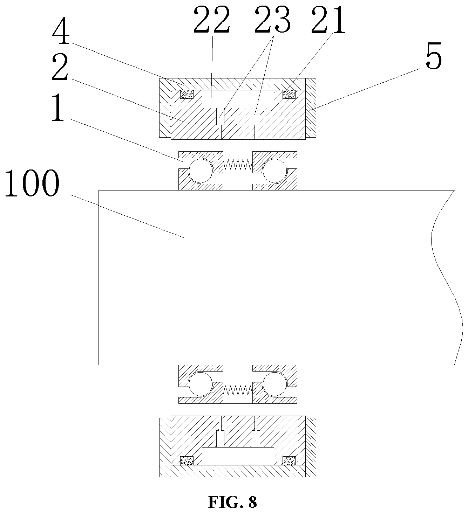

Specifically, the intermediate bearing 6 is a ball bearing. Referring to FIG. 8, when the rotary shaft 100 is started, the outer ring of the intermediate bearing 6 contacts the bottom of the stator bearing 2; and along with rotation of the rotary shaft 100, the inner ring of the rotary shaft bearing 1 is driven to rotate. At the same time, the outer ring of the intermediate bearing 6 is gradually separated from the outer ring of the rotary shaft bearing 1 due to an air film or an oil film, and the rotary shaft 100 drives the rotary shaft bearing 1 and the intermediate bearing 6 to rotate eccentrically in the stator bearing 2. When the rotary shaft 100 rotates stably at a high speed, the rotary shaft 100, the rotary shaft bearing 1 and the intermediate bearing 6 are coaxial, and rotate eccentrically around a circumference in the stator bearing 2. Meanwhile, the outer ring of the rotary shaft bearing 1, and the inner ring and outer ring of the intermediate bearing 6 rotate automatically.

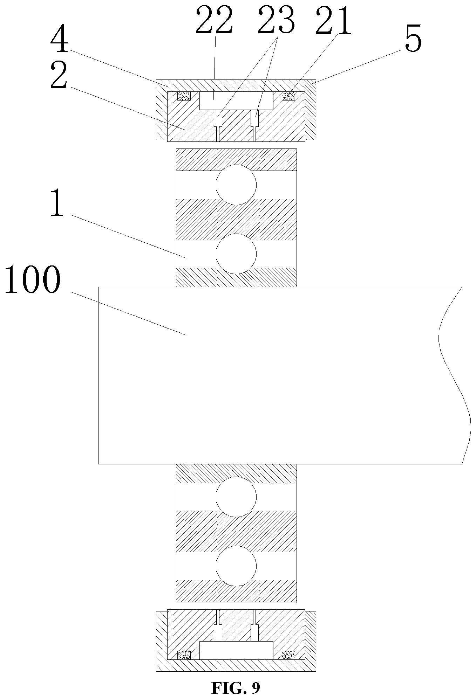

Further, the ball bearing or the roller bearing for the rotary shaft bearing 1 in Embodiment 1 and Embodiment 2 of the present disclosure become the integral multi-layer bearing, and there are multiple ball layers or roller layers, as shown in FIG. 9.

### Embodiment 3

Referring to FIG. 8, when the rotary shaft bearing 1 in the present disclosure uses the angular contact ball bearing, as the inner ring of the bearing is fixed on the rotary shaft 100, the outer ring, the holder and the ball will move relatively, specifically, proper measures need to be taken as the ball in the bearing is excessively loose.

The solutions provided by the present disclosure are as follows: A pair of angular contact ball bearings that are opposite to each other are selected, and a preloaded spring is provided between outer rings of the two angular contact ball bearings.

By adjusting a preload of the spring, the ball is close to or away from the holder, such that the frictional force in the bearing increases or decreases to meet the working condition.

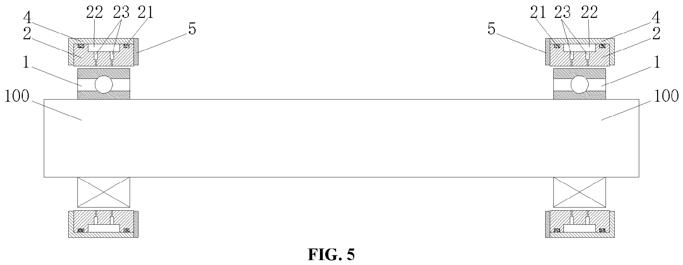

During specific applications, the parallel bearing provided by the present disclosure may be pairwise provided on the rotary shaft 100. Referring to FIG. 5, when the rotary shaft 100 rotates, the inner ring of the rotary shaft bearing 1 is driven to rotate, and the outer ring of the rotary shaft bearing 1 or the outer ring of the outermost intermediate bearing 6 rotates under the action of the air bearing or the oil film FRB. Rotational speeds of multiple parallel bearings on the same rotary shaft are adaptively adjusted according to the stress to achieve the synchronous rotation.

The parallel bearing provided by the present disclosure may be applied to working conditions requiring the high-speed rotary shaft, such as the rotor system and the microturbine system.

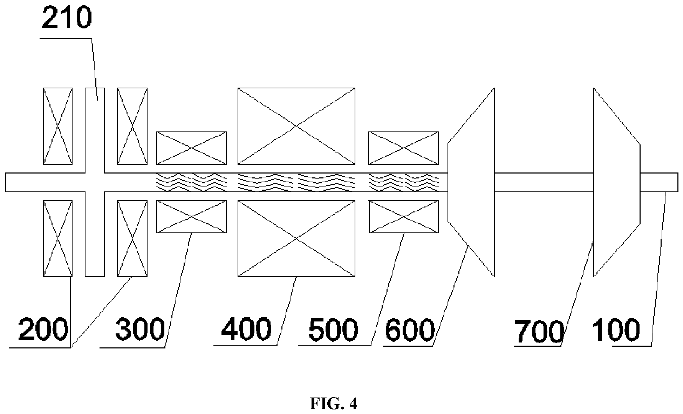

As shown in FIG. 4, the present disclosure further provides a rotor system including the above parallel bearing, including: a rotary shaft 100, a turbine 700, a compressor 600, a motor 400, a first parallel bearing 300, a second parallel bearing 500 and a thrust bearing 200; the rotary shaft 100 passes through the thrust bearing 200, the first parallel bearing 300, the motor 400, the second parallel bearing 500, the compressor 600 and the turbine 700 that are arranged sequentially; the rotary shaft 100 rotates in the thrust bearing 200, the first parallel bearing 300, a stator of the motor 400 and the second parallel bearing 500, and the rotary shaft 100 is fixedly connected to a thrust collar 210 of the thrust bearing 200, a worm gear of the turbomachine 700, and a compression wheel of the compressor 600.

In the above rotor system, the first parallel bearing 300 and the second parallel bearing 500 each are the parallel bearing of the present disclosure; and the rotational speeds of the outer rings of the rotary shaft bearings 1 on the first parallel bearing 300 and the second parallel bearing 500 are adaptive completely depending on the rotation condition, to ensure the reliable rotation of the rotary shaft 100.

Further, the thrust bearing 200 is a non-contact bearing.

Further, the thrust bearing 200 is an air bearing, and may specifically be any of a dynamic pressure bearing, a static pressure bearing or a dynamic and static pressure parallel bearing.

Further, in order to reduce influences on the efficiency of the compressor 600 from heat conduction at the hot end of the worm gear, the worm gear of the turbine 700 may be made of a ceramic material having a lower thermal conductivity coefficient or other materials.

Preferably, a reinforcing ring is provided between the compressor 600 and the turbine 700.

In view of dynamic performance of the rotor, the rotary shaft 100 should be as light as possible; and the smaller the diameter of the rotary shaft 100, the lighter the weight. However, such a case imposes higher requirements on strength of the rotary shaft 100 during the high-speed rotation of the rotor system. With the consideration of the dynamic characteristics of the rotor and the strength of the rotary shaft 100, the shaft diameter between the compressor 600 and the turbine 700 is set to be small and the reinforcing ring is provided between the compressor 600 and the turbine 700, to meet requirements on the rigidity of the rotor.

The rotor system of the present disclosure includes the above arrangements.

The present disclosure is applied to the microturbines. All bearings are provided in a motor casing, providing that the machining accuracy of the part for providing the stator bearing in the casing is ensured. During assembly, the part for connecting the stator bearing in the casing is clamped once for all. Therefore, the present disclosure reduces the machining accuracy and assembly accuracy of the microturbines, reduces the cost and is applicable to industrial mass production. Meanwhile, the present disclosure implements the compact layout of the microturbines, the short axial length of the rotary shaft, and the desired stability of the rotor system in high-speed operation.

The scope of the present invention is defined by the appended claims.

## Claims

1. A parallel bearing, comprising a rotary shaft bearing (1) and a stator bearing (2), wherein the rotary shaft bearing (1) is a contact bearing, and the rotary shaft bearing (1) is sleeved on a rotary shaft (100); and the stator bearing (2) is a non-contact bearing, the stator bearing (2) is sleeved on the rotary shaft bearing (1), a clearance is provided between an inner wall of the stator bearing (2) and an outer wall of the rotary shaft bearing (1), and the stator bearing (2) is fixed on a stator, **characterized in that** the parallel bearing comprises at least one intermediate bearing (6), wherein the at least one intermediate bearing (6) is a contact bearing, the at least one intermediate bearing (6) is sleeved between the rotary shaft bearing (1) and the stator bearing (2), and a clearance is provided between the stator bearing (2) and the at least one intermediate bearing (6); the at least one intermediate bearing (6) is a ball bearing.

2. A rotor system, comprising two parallel bearings according to claim 1, **characterized in that** the two parallel bearings are a first parallel bearing (300) and a second parallel bearing (500), and the first parallel bearing (300) and the second parallel bearing (500) are pairwise sleeved on a rotary shaft (100).

3. The rotor system according to claim 2, further comprising a turbine (700), a compressor (600), a motor (400) and a thrust bearing (200); **characterized in that** the rotary shaft (100) passes through the thrust bearing (200), the first parallel bearing (300), the motor (400), the second parallel bearing (500), the compressor (600) and the turbine (700), wherein the thrust bearing (200), the first parallel bearing (300), the motor (400), the second parallel bearing (500), the compressor (600) and the turbine (700) are arranged sequentially, the rotary shaft (100) rotates in a stator of the thrust bearing (200), the first parallel bearing (300), a stator of the motor (400) and the second parallel bearing (500), and the rotary shaft (100) is fixedly connected to a thrust collar (210) of the thrust bearing (200), a worm gear of the turbine (700), and a compression wheel of the compressor (600).

## Patentansprüche

1. Parallellager, umfassend ein Drehwellenlager (1) und ein Statorlager (2), wobei das Drehwellenlager (1) ein Kontaktlager ist, und das Drehwellenlager (1) auf eine Drehwelle (100) gesetzt ist; und das Statorlager (2) ein kontaktfreies Lager ist, wobei das Statorlager (2) auf das Drehwellenlager (1) gesetzt ist, ein Abstand zwischen einer Innenwand des Statorlagers (2) und einer Außenwand des Drehwellenlagers (1) bereitgestellt ist und das Statorlager (2) an einem Stator fixiert ist, **dadurch gekennzeichnet, dass** das Parallellager wenigstens ein Zwischenlager (6) umfasst, wobei das wenigstens eine Zwischenlager (6) ein Kontaktlager ist, das wenigstens eine Zwischenlager (6) zwischen das Drehwellenlager (1) und das Statorlager (2) gesetzt ist und ein Abstand zwischen dem Statorlager (2) und dem wenigstens einen Zwischenlager (6) bereitgestellt ist; wobei das wenigstens eine Zwischenlager (6) ein Kugellager ist.

2. Rotorsystem, umfassend zwei Parallellager nach Anspruch 1, **dadurch gekennzeichnet, dass** die zwei Parallellager ein erstes Parallellager (300) und ein zweites Parallellager (500) sind und das erste Parallellager (300) und das zweite Parallellager (500) paarweise auf eine Drehwelle (100) gesetzt sind.

3. Rotorsystem nach Anspruch 2, ferner umfassend eine Turbine (700), einen Kompressor (600), einen Motor (400) und ein Drucklager (200); **dadurch gekennzeichnet, dass** die Drehwelle (100) durch das Drucklager (200), das erste Parallellager (300), den Motor (400), das zweite Parallellager (500), den Kompressor (600) und die Turbine (700) verläuft, wobei das Drucklager (200), das erste Parallellager (300), der Motor (400), das zweite Parallellager (500), der Kompressor (600) und die Turbine (700) nacheinander angeordnet sind, die Drehwelle (100) sich in einem Stator des Drucklagers (200), dem ersten Parallellager (300), einem Stator des Motors (400) und dem zweiten Parallellager (500) dreht, und die Drehwelle (100) fest mit einem Druckring (210) des Drucklager (200), einem Schneckenrad der Turbine (700) und einem Kompressionsrad des Kompressors (600) verbunden ist.

## Revendications

1. Un palier parallèle, comprenant un palier d'arbre rotatif (1) et un palier de stator (2), dans lequel le palier d'arbre rotatif (1) est un palier à contact, et le palier d'arbre rotatif (1) est emmanché sur l'arbre rotatif (100) ; et le palier de stator (2) est un palier sans contact, le palier de stator (2) est emmanché sur le palier d'arbre rotatif (1), un jeu est agencé entre une paroi interne du palier de stator (2) et une paroi externe du palier d'arbre rotatif (1), et le palier de stator (2) est fixé sur un stator, **caractérisé en ce que** le palier parallèle comprend au moins un palier intermédiaire (6), dans lequel le au moins un palier intermédiaire (6) est un palier à contact, le au moins un palier intermédiaire (6) est emmanché entre le palier d'arbre rotatif (1) et le palier de stator (2), et un jeu est agencé entre le palier de stator (2) et le au moins un palier intermédiaire (6) ; le au moins un palier intermédiaire (6) est un roulement à billes.

2. Un système rotor, comprenant deux paliers parallèles selon la revendication 1, **caractérisé en ce que** les deux paliers parallèles sont un premier palier parallèle (300) et un deuxième palier parallèle (500), et le premier palmier parallèle (300) et le deuxième palier parallèle (500) sont emmanchés par paire sur l'arbre rotatif (100).

3. Un système rotor selon la revendication 2, comprenant en outre une turbine (700), un compresseur (600), un moteur (400) et un palier de butée (200) ; **caractérisé en ce que** l'arbre rotatif (100) passe à travers le palier de butée (200), le premier palmier parallèle (300), le moteur (400), le deuxième palier parallèle (500), le compresseur (600) et la turbine (700), dans lequel le palier de butée (200), le premier palmier parallèle (300), le moteur (400), le deuxième palier parallèle (500), le compresseur (600) et la turbine (700) sont agencés de façon séquentielle, l'arbre rotatif (100) pivote dans un stator du palier de butée (200), le premier palmier parallèle (300), un stator du moteur (400) et le deuxième palier parallèle (500), et l'arbre rotatif (100) est raccordé fixement à un collet de butée (210) du palier de butée (200), un engrenage à vis de la turbine (700), et une roue de compression du compresseur (600).
